# FASCICULE DE BREVET EUROPEEN

(11) **EP 3 136 570 B1**
(45) Date de publication et mention de la délivrance du brevet: **09.05.2018**
(21) Numéro de dépôt: 16183189.6
(22) Date de dépôt: 08.08.2016
(51) Int. Cl.: H02K 29/08, H02K 5/10, H02K 11/33, H02K 3/50

(54) **ENSEMBLE COMPRENANT UN DISPOSITIF DE CONNEXION ET UN ORGANE D'ÉTANCHÉITÉ**
ANORDNUNG MIT VERBINDUNGSVORRICHTUNG UND ABDICHTVORRICHTUNG.
ASSEMBLY COMPRISING A CONNECTING DEVICE AND A SEALING DEVICE.

(30) Priorité: 24.08.2015 FR 1557889
(43) Date de publication de la demande: 01.03.2017
(73) Titulaire: Valeo Systèmes de Contrôle Moteur, 95800 Cergy Saint Christophe (FR)
(72) Inventeur: BAUDESSON, Philippe, 27220 La Boissière (FR); GUIBET, GUIBET, 14400 VAUCELLES (FR); GUERIN, Fabien, 92320 CHATILLON (FR); LEBRASSEUR, Patrick, 60240 MONTAGNY-EN-VEXIN (FR); ROUET, Amaury, 75015 Paris (FR); BENCHEIKH, Amine, 93800 Epinay sur Seine (FR)
(74) Mandataire: Novembre, Christophe Adelphe

(56) Documents cités:
- US-A1- 2006 006 094

## Description

La présente invention concerne un ensemble comprenant un dispositif de connexion entre une machine électrique et un dispositif électronique de commande de la machine, et un organe d'étanchéité, pour des applications dans le domaine de l'automobile.

L'invention concerne également un compresseur de suralimentation électrique comprenant une machine électrique et son dispositif électronique de commande reliés électriquement par un ensemble selon l'invention.

Dans le cas d'un moteur diesel, le temps de latence d'un compresseur de suralimentation à gaz est responsable de l'émission de particules quand, dans une phase d'accélération à bas régime, le système d'injection essaie de fournir la puissance demandée en injectant un surplus de carburant.

Des considérations écologiques, et notamment la lutte contre le réchauffement climatique en réduisant les émissions de CO2, ont amené les équipementiers à proposer aux constructeurs d'automobiles des compresseurs de suralimentation électriques qui améliorent la réponse dynamique des moteurs à combustion interne de faible cylindrée à bas régime.

En particulier, la société VALEO SYSTEMES DE CONTRÔLE MOTEUR propose dans sa demande de brevet internationale WO 2013/045821 la mise en oeuvre d'un compresseur de suralimentation électrique pour assister le turbocompresseur à gaz au moment de l'enfoncement de la pédale d'accélérateur. Document US 2006/006094 décrit un ensemble comprenant un dispositif de connexion entre une machine électrique et un dispositif électronique de commande avec un organe d'étanchéité.

A la différence des compresseurs de suralimentation classiques entraînés par les gaz d'échappement, le compresseur de suralimentation électrique, c'est-à-dire entraîné par un moteur électrique, présente un temps de réponse instantané, et améliore le couple moteur à bas régime et l'accélération. Ce système permet de réduire considérablement la cylindrée des moteurs thermiques, et par conséquent de réduire la consommation de carburant.

Toutefois, dans certains modes de réalisation d'un tel système, il peut être difficile de connecter les entrées de phases du moteur électrique à un dispositif électronique de commande du moteur. Ceci est dû au fait que les entrées de phase du moteur sont le plus souvent proches de l'axe de rotation du moteur, et aussi au fait qu'il existe des contraintes d'étanchéité entre la partie turbine et la partie électrique, comme l'indique la demande de brevet internationale WO2005/024202. En outre, afin de contrôler le moteur, on utilise typiquement un capteur de position pour détecter la position du moteur. Il est préférable que ce capteur soit au plus proche du moteur ce qui est difficile à combiner avec les contraintes mentionnées précédemment.

L'invention vise à améliorer l'intégration du capteur de position dans un équipement électrique comprenant une machine électrique ayant un dispositif électronique de commande intégré, notamment dans un compresseur de suralimentation électrique où des contraintes d'étanchéités doivent être respectées.

A cet effet, l'invention concerne un ensemble comprenant :
- un dispositif de connexion destiné à connecter électriquement une machine électrique et un dispositif électronique de commande de la machine,
- un organe d'étanchéité destiné à être rapporté de manière étanche sur le dispositif de connexion,
ledit organe d'étanchéité comprenant un logement comportant un capteur de position destiné à mesurer une position de la machine électrique, ledit logement étant configuré de façon à s'étendre principalement suivant une direction longitudinale du dispositif de connexion lorsque ledit organe d'étanchéité est rapporté sur le dispositif de connexion.

Autrement dit, lorsqu'il est rapporté sur le dispositif de connexion, l'organe d'étanchéité est en contact étanche avec le dispositif de connexion, par exemple par l'intermédiaire d'un joint d'étanchéité.

Notamment, le contact entre l'organe d'étanchéité et le dispositif de connexion forme une ligne fermée continue.

Notamment, le dispositif de connexion s'étend principalement suivant un plan et la direction longitudinale du dispositif de connexion est une direction sensiblement perpendiculaire à ce plan principal du dispositif de connexion. En particulier, la direction longitudinale du dispositif correspond à l'axe de rotation de la machine électrique lorsque le dispositif de connexion est monté de manière à réaliser une connexion électrique entre la machine électrique et le dispositif électronique de commande.

Notamment, la machine électrique est une machine électrique tournante.

En intégrant le capteur de position dans l'organe d'étanchéité, on améliore l'intégration des fonctions électroniques dans un équipement électrique qui comprend la machine électrique et son dispositif électronique de commande dans un même boitier. En outre, en intégrant le capteur de position dans l'organe d'étanchéité, on s'assure que le capteur de position n'est pas susceptible d'être atteint par des particules, poussières par exemple, ou des gaz provenant d'un logement de la machine. En positionnant le logement du capteur de façon à s'étendre principalement suivant la direction longitudinale du dispositif de connexion, le capteur de position peut être disposé au plus prêt d'un élément de détection, tel qu'un aimant, positionné sur l'arbre de rotation de la machine électrique.

Notamment, le capteur de position est positionné de façon à s'étendre suivant la direction longitudinale du dispositif. Ainsi, le capteur est configuré de sorte à mesurer un signal émis par un élément de détection, notamment un aimant, et provenant radialement par rapport à l'arbre de rotation, par exemple depuis un aimant fixé sur une surface de l'arbre de rotation.

Notamment, le capteur de position est positionné de façon à s'étendre en vis-à-vis radialement par rapport à un arbre de rotation de la machine lorsque l'ensemble est monté sur un logement de la machine.

Selon un mode de réalisation, ledit organe d'étanchéité comprend une zone libre de matière destinée à recevoir un arbre de rotation de la machine électrique, notamment une extrémité de l'arbre de rotation de la machine électrique, ledit capteur étant positionné en périphérie de la dite zone libre de matière.

Selon un mode de réalisation, l'organe d'étanchéité comprend une face ayant une partie sensiblement plane, et une excroissance s'étendant depuis ladite face et comportant ledit capteur de position. L'espace compris entre la partie sensiblement plane et l'excroissance permet de recevoir une connexion électrique entre le dispositif de connexion électrique et la machine électrique.

Selon un mode de réalisation, ladite excroissance délimite la dite zone libre de matière.

Selon un mode de réalisation, ladite excroissance forme une chemise. Notamment, la chemise définit la zone libre de matière destinée à recevoir l'extrémité de l'arbre de rotation de la machine.

Selon un mode de réalisation, le dispositif de connexion comprend une partie qui est destinée à être connectée électriquement avec la machine électrique, et une partie qui est destinée à être connectée électriquement avec le dispositif électronique de commande de la machine.

Selon un mode de réalisation, l'organe d'étanchéité est destiné à venir de manière étanche entre la partie du dispositif de connexion qui est destinée à être connectée électriquement avec la machine électrique, et la partie du dispositif de connexion qui est destinée à être connectée électriquement avec le dispositif électronique de commande de la machine.

Selon un mode de réalisation, le logement du capteur est configuré de sorte à s'étendre du côté de la partie du dispositif qui est destinée à être connectée électriquement avec la machine électrique. Notamment, ledit logement est constitué d'une poche dont la seule ouverture est sur une face qui est opposée à la partie du dispositif qui est destinée à être connectée électriquement avec la machine électrique.

Selon un mode de réalisation, l'organe d'étanchéité est constitué d'un capot configuré pour recouvrir de manière étanche la partie qui est destinée à être connectée électriquement avec la machine électrique.

Selon un mode de réalisation, la partie qui est destinée à être connectée électriquement avec la machine électrique est située dans une partie centrale du dispositif de connexion ; et la partie du dispositif de connexion qui est destinée à être connectée électriquement avec le dispositif électronique de commande de la machine est située en périphérie du dispositif de connexion, radialement par rapport à ladite partie qui est destinée à être connectée électriquement avec la machine électrique.

Selon un mode de réalisation, un côté du dispositif de connexion comprend une portion destinée à être rapportée de manière étanche sur un logement de la machine électrique. Notamment, ladite portion est destinée à coopérer avec une paroi périphérique du logement de la machine, autour d'une portion de ladite paroi où des bornes, notamment toutes les bornes, de la machine électrique sortent à travers la paroi périphérique.

Selon un mode de réalisation, l'organe d'étanchéité est destiné à être rapporté sur un côté opposé au côté du dispositif qui comprend ladite portion.

Selon un mode de réalisation, ladite portion est configurée de sorte que, lorsque le dispositif de connexion est vu suivant sa direction longitudinale, la portion est entre la partie du dispositif de connexion qui est destinée à être connectée électriquement avec la machine électrique, et la partie du dispositif de connexion qui est destinée à être connectée électriquement avec le dispositif électronique de commande de la machine.

Selon un mode de réalisation, l'organe d'étanchéité comprend un élément de positionnement destiné à assurer un positionnement de l'ensemble par rapport à un logement de machine électrique lors du montage de l'ensemble sur le logement de la machine.

Selon un mode de réalisation, le logement du capteur de position est compris dans l'élément de positionnement. Ainsi, la portion de l'organe d'étanchéité qui comprend le capteur de position réalise aussi un positionnement de l'organe d'étanchéité, et donc du capteur de position, par rapport à un logement de la machine. Le nombre d'éléments dans un équipement électrique comprenant la machine électrique, l'ensemble, et le dispositif électronique de commande est donc réduit.

Selon un mode de réalisation, le dispositif de connexion comprend au moins une barre conductrice électriquement reliant une première borne électrique destinée à être rapportée sur une borne de la machine électrique et une seconde borne électrique destinée à être rapportée sur une borne du dispositif électronique de commande, la dite barre étant revêtue de matière électriquement isolante.

Selon un mode de réalisation, le dispositif de connexion comporte une pluralité de barres électriquement conductrices reliant une pluralité de premières bornes électriques destinées à être rapportées sur des bornes de la machine électrique et une pluralité de secondes bornes électriques destinées à être rapportées sur des bornes du dispositif électronique de commande, les dites barres étant revêtues de matière électriquement isolante.

Notamment, la ou les barres sont surmoulées par la matière électriquement isolante. Notamment, la ou les premières bornes sont situées à une première distance par rapport à la direction longitudinale du dispositif de connexion, et la ou les secondes bornes sont situées à une deuxième distance, par rapport à la direction longitudinale du dispositif de connexion, supérieure à la première distance. En particulier, la ou les barres conductrices électriquement s'étendent sensiblement radialement à partir d'une ou de premières bornes respectives jusqu'à la ou les secondes bornes respectives. Ainsi, vu suivant la direction longitudinale, le dispositif forme sensiblement une étoile dont les branches sont radiales.

Selon un mode de réalisation, la matière électriquement isolante forme un cylindre creux s'étendant suivant la direction longitudinale du dispositif de connexion, la ou les premières bornes électriques s'étendant dans le logement interne du cylindre creux depuis la paroi interne latérale du cylindre creux, la ou les secondes bornes électriques s'étendant depuis la paroi externe latérale du cylindre creux.

Selon un mode de réalisation, le logement interne du cylindre creux est destiné à recevoir la ou les bornes de la machine électrique, une première extrémité du cylindre creux étant destinée à venir en contact étanche avec une paroi d'un logement de la machine électrique depuis laquelle s'étendent la ou les bornes de la machine.

Selon un mode de réalisation, l'organe d'étanchéité est configuré de manière à fermer une seconde extrémité du cylindre creux opposée à la première extrémité en venant en contact étanche sur le cylindre.

Selon un mode de réalisation, l'ensemble est destiné à réaliser une connexion électrique interne à un boitier recevant une machine électrique et son dispositif électronique de commande.

L'invention concerne aussi un équipement électrique comprenant :
- une machine électrique,
- un dispositif électronique de commande destiné à commander la machine électrique,
- un boitier logeant la machine électrique dans un premier logement, et le dispositif électronique de commande dans un deuxième logement, les deux logements étant étanches l'un par rapport à l'autre,
- un ensemble selon l'une quelconque des revendications précédentes destiné à faire une connexion électrique étanche entre la machine électrique et le dispositif électronique de commande.

Grâce à l'ensemble, la connexion électrique entre la machine et le dispositif électronique de commande est faite de manière étanche en intégrant efficacement le capteur de position de la machine électrique.

Selon un mode de réalisation, le capteur de position est positionné radialement par rapport à l'arbre de rotation de la machine électrique, de manière à détecter un signal émis par un élément correspondant porté par l'arbre de rotation, notamment un élément situé au niveau d'une portion de l'arbre de rotation située en vis-à-vis du capteur de position. En particulier, le capteur de position est positionné radialement par rapport à une extrémité de l'arbre de rotation, de manière à détecter un signal émis par un élément correspondant situé au niveau d'une portion extrémale de l'arbre de rotation.

Notamment, l'ensemble selon l'invention est configuré pour être monté sur un logement comprenant la machine électrique, en particulier sur une paroi périphérique du logement de la machine. Notamment, la paroi est une paroi axialement périphérique, en tenant compte de l'axe de rotation du moteur. En particulier, la paroi périphérique est à l'interface entre le logement de la machine et un logement comprenant le dispositif électronique de commande.

L'invention concerne aussi un compresseur de suralimentation de véhicule automobile comprenant un équipement électrique selon l'invention.

Notamment, une borne de la machine électrique désigne une phase de la machine électrique.

L'invention va être décrite en détail dans la description qui suit en liaison avec les dessins ci-annexés. Il est à noter que ces dessins n'ont d'autre but que d'illustrer le texte de la description et ne constituent en aucune sorte une limitation de la portée de l'invention.
La figure 1 est une vue de dessus d'une partie électrique d'un compresseur de suralimentation électrique connu de l'état de la technique montrant une carte électronique de puissance.
Les figures 2 et 3 sont des vues en perspective d'un dispositif de connexion muni d'un organe d'étanchéité formant un ensemble.
La figure 4 est une vue éclatée de l'ensemble des figures 2 et 3.
La figure 5 représente le dispositif de connexion des figures 2 à 4.
La figure 6 est une demi-coupe radiale de l'ensemble monté dans un boiter, la machine électrique n'étant pas représentée.
La figure 7 est une autre vue de coupe radiale dans laquelle la machine électrique est représentée.
La figure 8 est une vue de dessus d'un équipement électrique comprenant une machine électrique, l'ensemble, et un dispositif électronique de commande de la machine électrique.
La figure 9 est une vue éclatée de l'équipement électrique, la machine électrique et le dispositif électronique de commande n'étant pas représentés.
La figure 10 est une vue éclatée d'un compresseur de suralimentation électrique comprenant l'équipement électrique.
Les figures 11 à 15 illustrent un dispositif comprenant un capteur de position utilisable dans l'équipement électrique, en particulier dans l'ensemble.

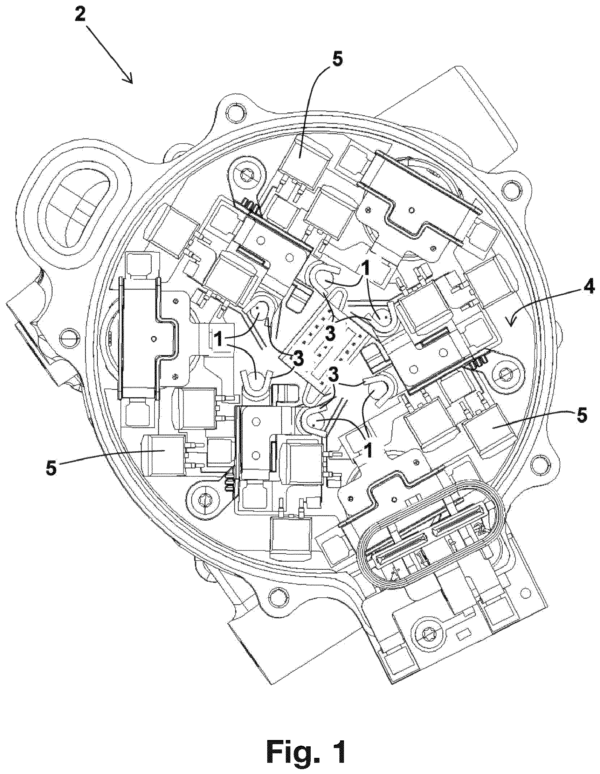

La figure 1 illustre une liaison électrique entre des bornes 1, notamment des entrées de phase, d'une machine électrique tournante et des pièces de connexion 3 d'un dispositif électronique de commande 4 de la machine dans un compresseur de suralimentation électrique 2. Le dispositif électronique de commande comprend par exemple une carte électronique de puissance 4.

Le stator de la machine fait un premier diamètre de sensiblement 40 mm et la carte électronique de puissance 4 fait un second diamètre de sensiblement 110 mm. Les bornes 1 de la machine sont disposées sur un palier du boitier du compresseur à des intervalles angulaires prédéterminés autour de l'axe de rotation de la machine, à une première distance prédéterminée de l'axe de rotation, égale au plus à 20 mm. Ces bornes 1 de la machine sortent alors au milieu de la carte électronique de puissance 4 pour être connectées aux pièces de connexion 3 de la carte électronique 4. La présence de ces pièces de connexion 3 au milieu de la carte de puissance 4 limite les possibilités de placement et de routage des composants électroniques 5 de la carte 4.

En outre, les composants électroniques 5 ne sont pas protégés vis-à-vis de la partie machine du compresseur de suralimentation 2, car il n'y a pas d'étanchéité entre la partie machine et la partie contenant le dispositif électronique de commande. Des particules métalliques issues de la partie machine peuvent venir dans le dispositif électronique de commande 4 pour y provoquer des court-circuits parasites.

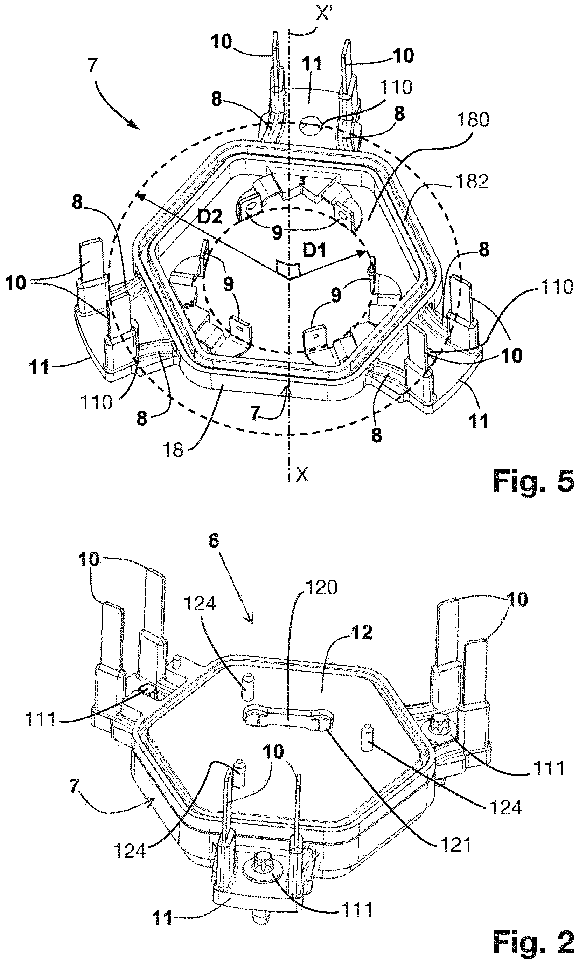

Les figures 2, 3, 4 illustrent un exemple d'un ensemble 6 selon l'invention destiné à assurer une connexion électrique étanche entre la machine électrique et son dispositif électronique de commande.

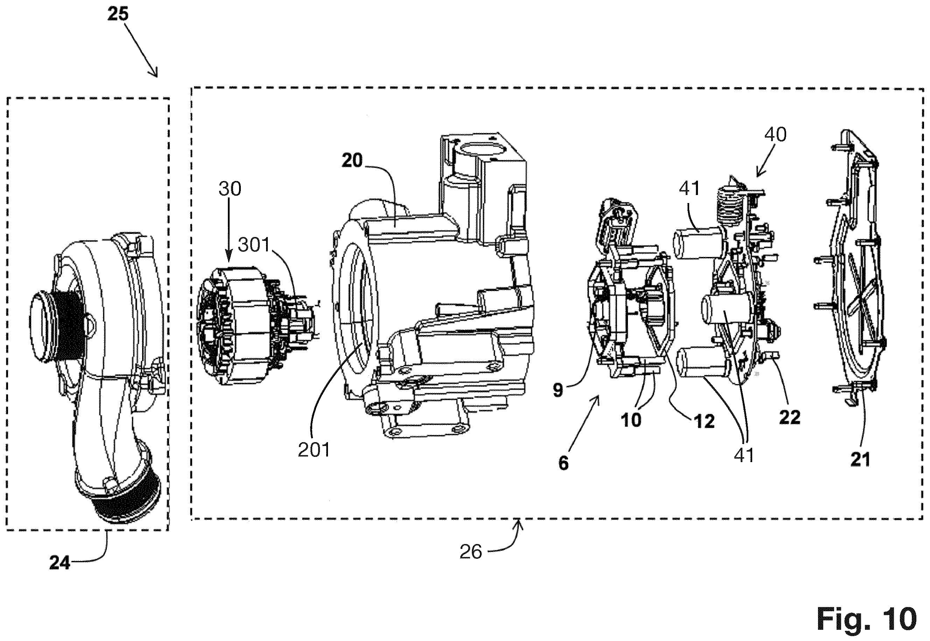

L'ensemble 6 comprend un dispositif de connexion 7 qui est destiné à connecter électriquement la machine électrique 30 et le dispositif électronique de commande 40 de la machine, qui sont par exemple logés de manière étanche dans un boîtier 20 tel qu'illustré en figure 10.

Un organe d'étanchéité 12 est rapporté de manière étanche sur le dispositif de connexion 7. Par exemple, une couronne 17, formant joint d'étanchéité, coopère avec une gorge circonférentielle sur un côté 182 du dispositif de connexion 7 et l'organe d'étanchéité 12, en particulier un bord de l'organe d'étanchéité 12, pour assurer un contact étanche entre l'organe d'étanchéité 12 et le dispositif de connexion 7. Cependant, le contact étanche entre l'organe d'étanchéité 12 et le dispositif de connexion 7 pourrait se faire sans la couronne 17, par exemple en prévoyant des joints d'étanchéité intégraux avec l'organe d'étanchéité 12 et /ou le dispositif de connexion 7.

L'organe d'étanchéité 12 comprend un logement 120 comportant un capteur de position. Pour des raisons de clarté, le capteur de position n'est pas représenté sur les figures 2 à 4. Le capteur de position est destiné à mesurer une position de la machine électrique 30. Lorsque le premier organe d'étanchéité 12 est rapporté sur le dispositif de connexion 7, le logement 120 s'étend principalement suivant une direction longitudinale XX' du dispositif de connexion 7 comme illustré sur la figure 5 qui sera décrite plus loin.

En intégrant le capteur de position de la machine électrique dans l'organe d'étanchéité 12, on améliore la compacité de l'ensemble comprenant la machine électrique 30 et le dispositif électronique de commande 40 de la machine.

Le dispositif de connexion 7 comprend notamment une partie 9 qui va être connectée électriquement avec la machine électrique 30, et une partie 10 qui va être connectée électriquement avec le dispositif électronique de commande 40.

En particulier, l'organe d'étanchéité 12 vient de manière étanche entre la partie 9 du dispositif de connexion qui est destinée à être connectée électriquement avec la machine électrique, et la partie 10 du dispositif de connexion qui est destinée à être connectée électriquement avec le dispositif électronique de commande 4. Notamment, l'organe d'étanchéité forme un capot 120 qui recouvre de manière étanche la partie 9 destinée à être connectée à la machine 30. Ainsi, lorsque le dispositif de connexion 7 est monté sur le logement de la machine, l'organe d'étanchéité contribue à la séparation étanche entre la partie 201 du boîtier 20 comprenant la machine 30 et la partie 202 du boîtier 20 comprenant le dispositif électronique de commande 40. L'organe d'étanchéité 12 pourrait être réalisé par exemple avec de la résine. Une étanchéité supplémentaire devrait alors être prévue pour empêcher la résine de s'écouler dans la machine 30.

En particulier, lorsque l'organe d'étanchéité 12 est monté sur le dispositif de connexion 7, le logement 120 du capteur s'étend du côté de la partie 9 du dispositif de connexion 7 qui est destinée à être connectée électriquement avec la machine électrique 30. Ainsi, le capteur de position peut être positionné à proximité de l'arbre de rotation de la machine 30 qui se trouve dans la même zone que les bornes de la machine.

Le dispositif de connexion 7 est illustré en figure 5. La partie 9 qui est destinée à être connectée électriquement avec la machine électrique 30 est notamment située dans une partie centrale du dispositif de connexion 7. La partie 10 du dispositif de connexion 7 qui est destinée à être connectée électriquement avec le dispositif électronique de commande 40 de la machine est notamment située en périphérie du dispositif de connexion 7, radialement par rapport à la partie 9 qui est destinée à être connectée électriquement avec la machine électrique 30.

En particulier, la partie qui est destinée à être connectée électriquement avec la machine électrique 30 comprend une pluralité de premières bornes électriques 9 destinées à être rapportées sur des bornes respectives de la machine électrique 30, notamment des entrées de phases de la machine électrique 30 ; et la partie du dispositif de connexion 7 qui est destinée à être connectée électriquement avec le dispositif électronique de commande 40 de la machine comprend une pluralité de secondes bornes électriques 10 destinées à être rapportées sur des bornes électriques correspondantes du dispositif électronique de commande 40, notamment d'une carte électronique de puissance. Les premières bornes électriques 9 et les secondes bornes électriques 10 sont reliées par des barres conductrices électriquement 8 qui sont revêtues d'une matière électriquement isolante. La matière électriquement isolante peut-être déposée par surmoulage sur les barres conductrices. La matière électriquement isolante est par exemple du plastique. Les premières 8 et secondes 9 bornes électriques sont notamment destinées à être connectées par une opération de solidarisation mécanique avec les bornes correspondantes de la machine 30 ou du dispositif électronique de commande 40, telle que par brasage, soudage, vissage ou autre. En particulier, la matière électriquement isolante maintient ensemble les barres conductrices électriquement 8, par exemple par l'intermédiaire d'un cylindre 18 décrit plus loin.

Par exemple, les premières bornes 9 sont agencées sensiblement à une première distance D1 par rapport à la direction longitudinale XX' du dispositif de connexion 7; et les secondes bornes 10 sont agencées autour de la direction longitudinale XX' à une seconde distance prédéterminée D2, supérieure à la première distance prédéterminée D1. A cet effet, les barres conductrices électriquement 8 s'étendent sensiblement radialement à partir des premières bornes 9. Ainsi, vu suivant la direction longitudinale XX', les barres 8 forment sensiblement une étoile dont les branches sont radiales. La seconde distance prédéterminée D2 permet de positionner les secondes bornes 10 en périphérie du dispositif électronique de commande 40. Ainsi, la connexion électrique au niveau du dispositif électronique de commande est réalisée à la périphérie du dispositif électronique de commande, contrairement à l'art antérieur, ce qui libère de la place pour le positionnement de composants électroniques. Dans cet exemple particulier, la seconde distance D2 peut être limitée à 55 mm pour correspondre au diamètre du dispositif électronique de commande.

Notamment, les premières bornes 9 et secondes bornes 10, s'étendent parallèlement à la direction longitudinale XX' du dispositif de connexion 7 de manière à venir face aux bornes correspondantes de la machine électrique ou du dispositif électronique de commande. En particulier, les premières bornes 9 s'étendent en outre le long d'un cercle, ayant pour diamètre la première distance prédéterminée D1, centré sur la direction longitudinale XX' du dispositif de connexion 7 ; et les deuxièmes bornes 10 sont dans des plans radiaux comprenant la direction longitudinale XX' du dispositif de connexion 7.

Notamment, les bornes 8, 9 et leurs barres de connexion 8 respectives sont groupées sur des positions angulaires par rapport à la direction longitudinale XX' du dispositif de connexion 7. Ceci est particulièrement avantageux lorsque le dispositif électronique de commande 4 comprend des modules de puissances régulièrement répartis sur des positions angulaires, chacun des modules ayant deux bornes électriques qui vont être connectées à deux deuxièmes bornes 10 du dispositif de connexion 7.

En particulier, la matière électriquement isolante du dispositif de connexion 7 forme un cylindre creux 18 s'étendant suivant la direction longitudinale XX' du dispositif de connexion 7. Les premières bornes électriques 9 s'étendent dans le logement interne 180 du cylindre 18 depuis la paroi interne latérale du cylindre. Le logement interne 180 peut être centré sur la direction longitudinale XX' du dispositif de connexion7 et/ou s'étendre sur toute la hauteur du cylindre 18. Les secondes bornes électriques 10 s'étendent depuis la paroi externe latérale du cylindre 18.

Notamment, la matière électriquement isolante comprend des portions 11 destinées à assurer un plaquage du dispositif de connexion 7 sur le logement de la machine électrique, par exemple avec des organes de fixation, tels qu'entre autres des vis 111 positionnées dans des trous 110, ou des clips. Les portions de plaquage 11 s'étendent en particulier depuis la paroi externe latérale du cylindre 18 et peuvent en outre relier au moins une partie des barres de conduction 8 entre elles pour améliorer le maintien des barres 8, comme par exemple en figure 5. En figure 5, les portions de plaquage 11 relient deux barres conductrices 8 d'un même groupe.

En particulier, le dispositif de connexion 7 contribue à l'étanchéité entre la machine électrique 30 et le dispositif électronique de commande 40 en réalisant en outre un contact étanche entre le dispositif de connexion et le logement de la machine. A cet effet, un côté du dispositif de connexion 7 comprend une portion 181 destinée à être rapportée de manière étanche sur le logement de la machine électrique.

Lorsque le dispositif de connexion 7 est vu suivant sa direction longitudinale XX', la portion 181 est par exemple située entre la partie 9 du dispositif de connexion qui est destinée à être connectée électriquement avec la machine électrique 30, et la partie 10 du dispositif de connexion qui est destinée à être connectée électriquement avec le dispositif électronique de commande 40.

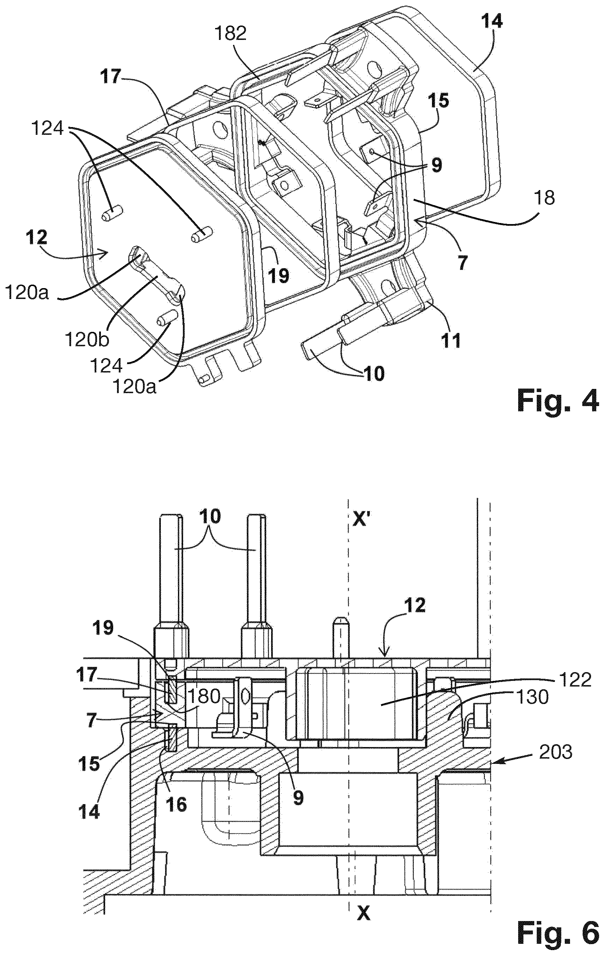

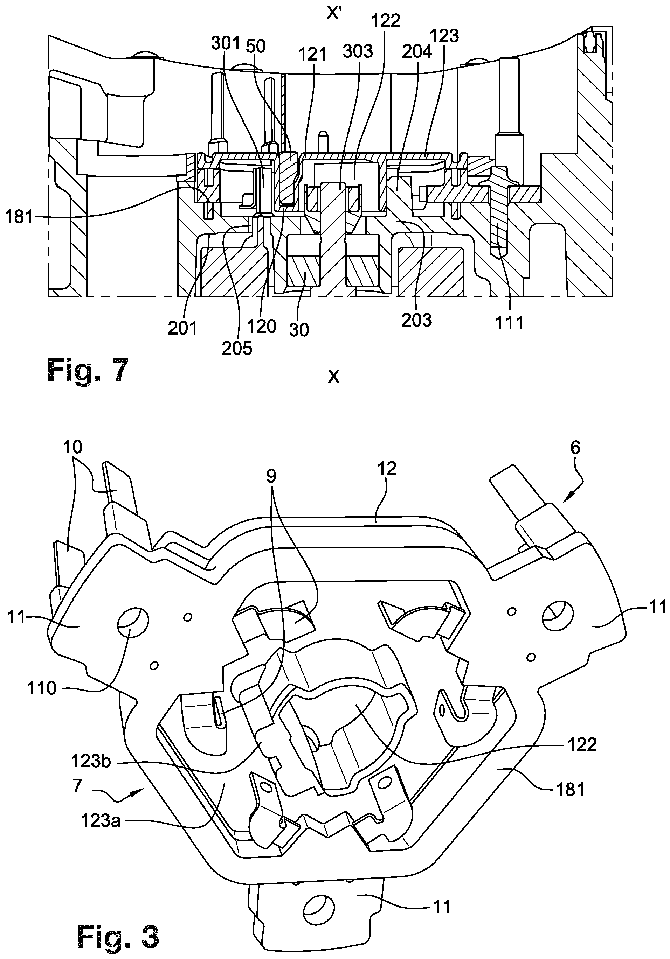

Dans l'exemple illustré en figures 2 à 5, une première extrémité 181 du cylindre 18 réalise la portion destinée à être rapportée de manière étanche sur le logement de la machine électrique. Comme illustré en figures 6 et 7, lorsque le dispositif de connexion 7 est monté sur une paroi 203 depuis laquelle s'étendent les bornes 301 de la machine 30, la première extrémité 181 du cylindre 18 vient en contact étanche avec la paroi 203, et le logement interne 180 du cylindre 18 reçoit les bornes 301 de la machine 30, notamment par une ouverture délimitée par la première extrémité 181. Les premières bornes 9 du dispositif de connexion 7 peuvent alors être connectées aux bornes 301 de la machine 30.

Par exemple, l'étanchéité entre le logement de la machine 30 et la première extrémité 181 est obtenue par une couronne 14, formant joint d'étanchéité, qui coopère avec la première extrémité 181 du cylindre 18 et une gorge circonférentielle située dans la paroi 203 du logement de la machine 30. Cependant, le contact étanche entre la première extrémité 181 et le logement de la machine pourrait se faire sans la couronne 14, par exemple en prévoyant des joints d'étanchéité intégraux avec la première extrémité 181 et/ou le logement de la machine 30.

En particulier, l'organe d'étanchéité 12 est rapporté sur un côté opposé au côté du dispositif de connexion 7 comprenant la portion 181 destinée à être rapportée de manière étanche sur le logement de la machine électrique 30. Dans l'exemple illustré, une seconde extrémité 182 du cylindre 18 opposée à la première extrémité 181 reçoit l'organe d'étanchéité 12 en contact étanche. L'organe d'étanchéité 12 ferme de manière étanche une ouverture délimitée par la seconde extrémité 182 du cylindre creux 18. Par exemple, une couronne 17, formant joint d'étanchéité, coopère avec une gorge circonférentielle située dans la seconde extrémité 182 et l'organe d'étanchéité 12, en particulier avec un bord de l'organe d'étanchéité 12, pour assurer un contact étanche entre l'organe d'étanchéité 12 et le dispositif de connexion 7. Cependant, le contact étanche entre l'organe d'étanchéité 12 et la seconde extrémité 182 pourrait se faire sans la couronne 17, par exemple en prévoyant des joints d'étanchéité intégraux avec l'organe d'étanchéité 12 et/ou la seconde extrémité 182.

Notamment, le logement du capteur de position est constitué d'une poche 120 définie dans l'organe d'étanchéité 12. Le capteur de position est reçu dans la poche 120 par une ouverture 121 de la poche 120. L'ouverture 121 est sur une face de l'organe d'étanchéité 120 qui est opposée à la partie 9 du dispositif qui est destinée à être connectée électriquement avec la machine électrique 30. En particulier, l'ouverture 121 est la seule ouverture de la poche 120.

En particulier, l'organe d'étanchéité 12 comprend une zone libre de matière 122 destinée à recevoir l'arbre de rotation 303 de la machine 30. Notamment, la zone libre de matière 122 reçoit une extrémité de l'arbre de rotation 303 de la machine comme illustré en figure 7. Le capteur de position 50 est situé en périphérie de la zone libre de matière 122, en particulier dans sa périphérie immédiate. Prévoir une zone 122 de réception de l'arbre de rotation 303 dans l'organe d'étanchéité 12 permet d'améliorer encore l'intégration dans l'équipement électrique qui comprend la machine électronique 30 et son dispositif électronique de commande dans un même boitier 20. Le capteur de position 50 est au plus proche de l'arbre de rotation 303 de la machine électrique 30 pour détecter le signal émis par un élément positionné sur l'arbre de rotation 303.

En particulier, l'organe d'étanchéité 12 comprend une face 123 qui a une partie sensiblement plane 123a et une excroissance 123 b qui s'étend depuis la face 123. Cette excroissance 123a comporte le logement 120 qui reçoit le capteur de position 50. L'espace compris entre la partie sensiblement plane 123a et l'excroissance 123b permet de recevoir la connexion électrique entre le dispositif de connexion 7 et la machine électrique 30. Notamment, les premières bornes 9 du dispositif de connexion 7 sont dans cet espace lorsque l'organe d'étanchéité 12 est monté sur le dispositif de connexion 7 ; et les bornes 301 de la machine électrique 30 y sont reçues lorsque l'ensemble 6 est monté sur le logement de la machine 30.

En particulier, l'excroissance 123b délimite la zone libre 122 de l'organe d'étanchéité 12, par exemple en formant une chemise comme illustré en figure 3, ce qui améliore encore l'intégration dans l'équipement électrique qui comprend la machine électronique 30 et son dispositif électronique de commande 40 dans un même boitier 20. En outre, la forme de chemise améliore la tenue mécanique de l'excroissance 123b.

En particulier, l'excroissance 123b qui comporte le logement 120 forme un élément de positionnement qui assure un positionnement de l'ensemble 6 par rapport au logement de la machine lors du montage de l'ensemble 6 sur le logement de la machine. A cet effet, l'excroissance 123b vient en correspondance avec une paroi 204 qui s'étend depuis la paroi 203 du logement de la machine 30. Cependant, l'organe d'étanchéité 12 pourrait comprendre un autre élément de positionnement issu de l'organe d'étanchéité 12.

L'ensemble 6 est particulièrement avantageux pour connecter électriquement une machine électrique 30 et son dispositif électronique de commande 40 en respectant l'étanchéité entre ceux-ci. L'ensemble 6 permet en particulier d'assurer le positionnement et l'étanchéité du capteur de position 50 de la machine. L'ensemble 6 permet en outre de libérer l'espace de routage dans le dispositif électronique de commande 40 en ramenant à la périphérie les bornes du dispositif électronique de commande 40 qui doivent être connectées la machine 30.

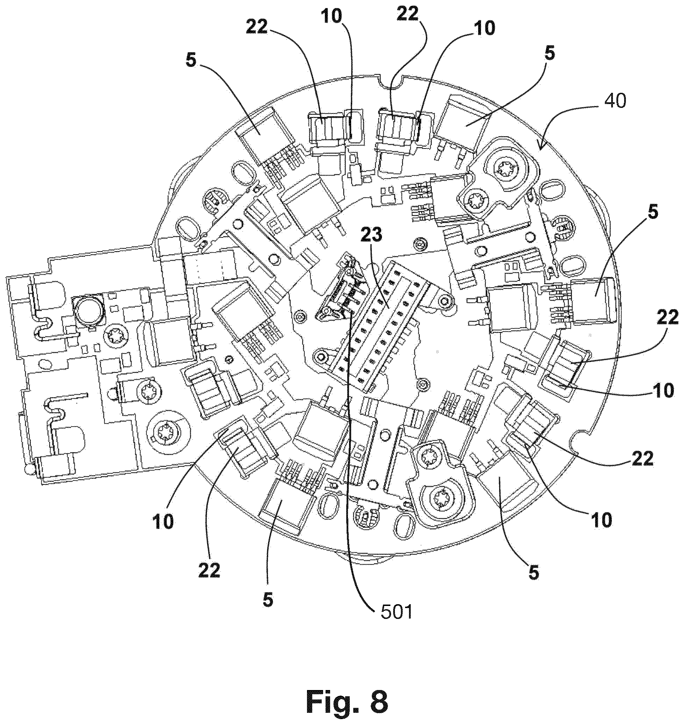

L'ensemble 6 permet aussi de garantir un processus d'assemblage propre. Dans l'art antérieur, les bornes 1 issues de la machine sont entourées de composants électroniques 5. Ces composants 5 risquent d'être abimés par l'opération de soudage des bornes 1 de la machine avec les bornes 3 du dispositif électronique de commande. La figure 8 montre un dispositif électronique de commande 40 d'un équipement électrique selon l'invention lorsqu'il est monté dans le boitier 20 comme il sera décrit plus loin. Avec l'ensemble 6 selon l'invention, les bornes 22 du dispositif électronique de commande 40 sont entourés de moins de composants électroniques 5 ce qui diminue les risques de dommage de ces composants 5.

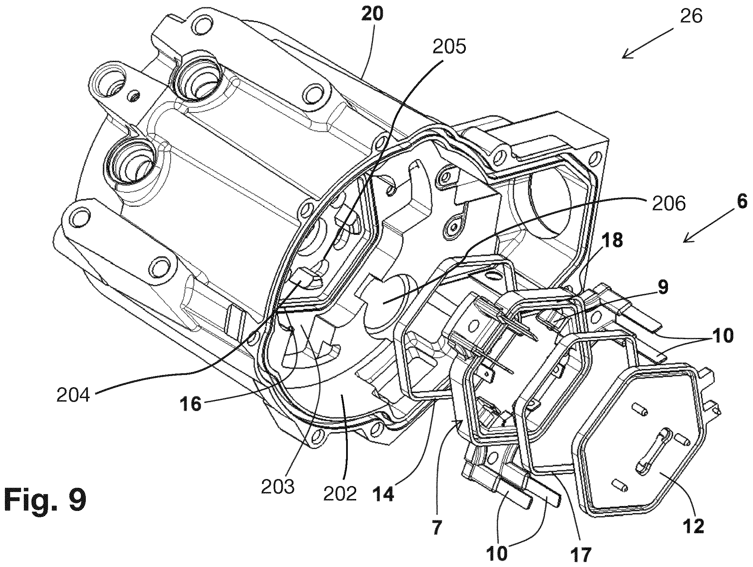

Le montage de l'ensemble 6 avec la machine électrique 30 et le dispositif électronique de commande 40 va être plus précisément décrit en faisant référence aux figures 9 et 10.

La machine électrique 30 et le dispositif électronique de commande 40 sont logés dans un même boitier 20. Le boitier 20 comprend un premier logement 201 recevant la machine électrique 30 et un deuxième logement 202 recevant le dispositif électronique de commande 40 de la machine. Une paroi 203 sépare le premier logement 201 du deuxième logement 202. En particulier, la paroi 203 est une paroi périphérique du premier logement 201 et est sensiblement perpendiculaire à l'axe de l'arbre de rotation 303 de la machine électrique 30.

Le montage de l'ensemble 6 comprend donc successivement:
- le montage de la machine électrique 30 dans le premier logement 201, les bornes 301 de la machine 30 passant par des ouvertures 205 de la paroi de séparation 203 ;
- dans un premier temps, la pose du dispositif de connexion 7 sur la paroi de séparation 203 du boitier 20 avec un contact étanche entre le dispositif de connexion 7 et la paroi 203 comme décrit précédemment, et une accessibilité des bornes 301 de la machine 30 pour une première soudure avec les bornes 9 du dispositif de connexion 7;
- dans un deuxième temps, l'obstruction par l'organe d'étanchéité 12 de la partie accessible pour la première soudure afin d'assurer un deuxième niveau d'étanchéité, notamment en recouvrant de manière étanche le logement interne 180 du dispositif de connexion 7 comme décrit précédemment;
- le positionnement du dispositif électronique de commande 40 dans le deuxième logement 202 ; le dispositif électronique de commande 40 est notamment introduit dans le deuxième logement 202 par une ouverture qui est opposée à l'ouverture par laquelle la machine électrique 30 est introduite dans le boitier 20 ;
- une deuxième soudure, consistant en la soudure déportée dans une zone pouvant être gardée propre, des secondes bornes 10 du dispositif de connexion 7 avec les bornes 22 du dispositif électronique de commande 40 ;
- le deuxième logement 202 peut être ensuite fermé par un couvercle 21.

L'organe d'étanchéité 12 et le dispositif électronique de commande 40 peuvent être montés en même temps dans le boîtier 20, après le montage du dispositif de connexion 7. En particulier, le dispositif électronique de commande 40 peut être monté sur l'organe d'étanchéité 12 par un bouterollage d'excroissances 124 (visibles en figures 2 et 4) de l'organe d'étanchéité 12, puis l'organe d'étanchéité 12 et le dispositif électronique de commande 40 sont montés en même temps dans le boîtier 20

En particulier, le dispositif de connexion 7 permet donc une première soudure avec chaque borne 301 de la machine 30, puis dans un deuxième temps, une seconde soudure pour se connecter avec chacune des bornes 22 du dispositif électronique de commande 40.

Lorsque l'ensemble 6 est monté sur la paroi de séparation 203, la direction longitudinale XX' du dispositif de connexion 7 correspond à l'axe de rotation de la machine 30. La première distance prédéterminée D1 permet de positionner les premières bornes 9 de manière à pouvoir être soudées avec les bornes 301 de la machine 30. La deuxième distance prédéterminée D2 permet de positionner les secondes bornes 10 en périphérie du dispositif électronique de commande 40, monté ultérieurement, pour être soudées aux bornes 22 du dispositif électronique de commande 40.

L'organe d'étanchéité 12 et la portion 181 du dispositif de connexion 7 qui se rapporte de manière étanche sur le logement 201 de la machine électrique 30 permettent d'assurer une étanchéité entre le premier 201 et le deuxième 202 logements. Ainsi, les ouvertures 205, par lesquelles les bornes 301 de la machine 30 traversent la paroi 203, peuvent se passer de joint d'étanchéité. Le passage des bornes 301 de la machine 30 à travers la paroi de séparation 203 peut se faire de manière non étanche. Après montage de l'ensemble 6, les premier 201 et deuxième 202 logements sont étanches entre eux. La paroi de séparation 203 assure une étanchéité entre les deux logements 201, 202.

En particulier, après le montage de l'ensemble 6, le capteur de position 50 est positionné en vis-à-vis radialement par rapport à l'arbre de rotation 303 de la machine 30 afin de mesurer une position. En positionnant le capteur de position 50 de sorte à venir en vis-à-vis radialement par rapport à l'arbre de rotation de la machine, on simplifie la mesure de position de la machine 30 par rapport à une position où le capteur serait dans le prolongement de l'axe de rotation de la machine 30.

Le dispositif électronique de commande 40 comprend par exemple une carte électronique de puissance, qui comprend notamment un substrat métallisé isolé (SMI), comme illustré en figure 8. Les bornes du dispositif électronique de commande 40 sont par exemple des composants 22 montés en surface (CMS) sur la carte électronique. Cependant, le dispositif électronique de commande 40 pourrait être fait autrement. Par exemple, il pourrait comprendre des modules de puissance posés sur un support.

Les bornes 22 occupent une place réduite dans le dispositif électronique de commande 40. L'espace libéré au centre du dispositif électronique de commande 40, du fait que les bornes 22 sont déportées en périphérie, permet le placement d'un interconnecteur de signal 23 et d'une sortie 501 du capteur de position 50.

La paroi de séparation 203 peut comprendre des logements tels que des logements 206 qui reçoivent des composants 41 du dispositif électronique de commande 40, par exemple des condensateurs. Ces logements sont fermés du côté du premier logement 201, ou munis d'une ouverture étanche, afin de respecter l'étanchéité entre le premier logement 201 et le deuxième logement 202.

L'équipement électrique 26 réalisé de la sorte est accouplé à une partie turbine 24 pour constituer un compresseur de suralimentation électrique 25 compact dont le dispositif électronique de commande 40 intégré est d'un montage facile et à l'abri des particules polluantes.

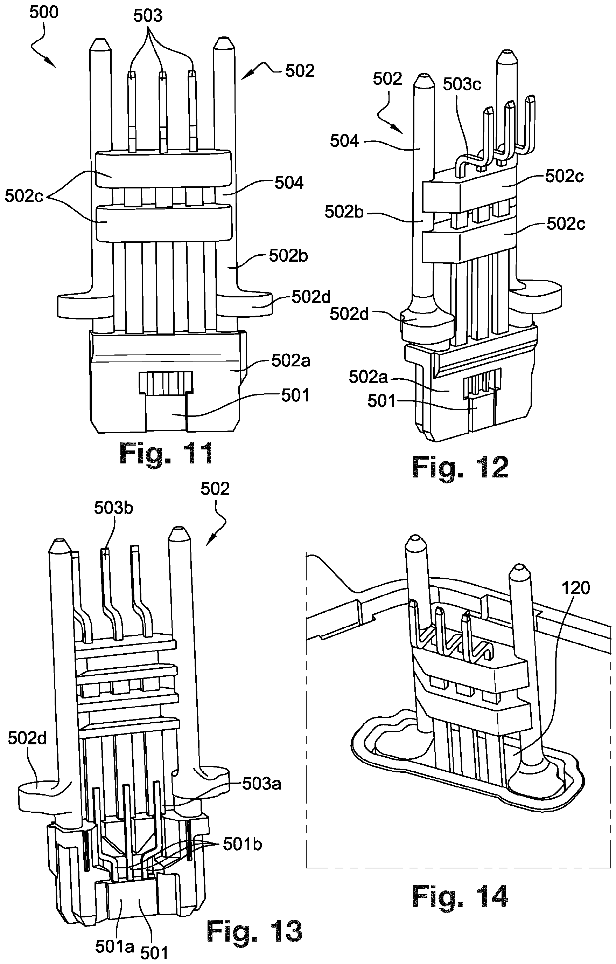

Les figures 11 à 15 illustrent un exemple de dispositif de détection 500 comprenant un capteur de position 501 utilisable dans l'ensemble 6 décrit précédemment. Le capteur de position 501 est monté sur un support 502. Ce support 502 est de préférence en un matériau électriquement isolant, par exemple du plastique. Ce support 502 est reçu dans le logement 120 de l'organe d'étanchéité 12 comme illustré en figure 14. Le logement 120 forme un trou non traversant à l'intérieur du boitier 20. Le support 502 du dispositif de détection 500 vient contre les parois du logement 120, ce qui contribue au maintien en place du dispositif de détection 500, et donc du capteur de position 501, dans le boîtier 20.

Le dispositif de détection 500 pourrait être utilisé dans un autre trou positionné à l'intérieur du boîtier 20, par exemple un trou formé dans une paroi appartenant au boitier 20, du moment que ce trou est non traversant et que le maintien du dispositif de détection 500, et notamment du capteur de position 501, est obtenu au moins en partie par la réception du support 502 contre les parois du trou, notamment ses parois latérales et sa paroi du fond.

Grâce à ce support 502, le capteur de position 501 est facilement manipulable pour être monté dans l'équipement électrique 26, notamment dans l'organe d'étanchéité 12.

En particulier, une première portion 502a du support 502 du dispositif de détection 500 reçoit le capteur de position 501. Cette portion 502a est située à une première extrémité du support 502. Lorsque le dispositif de détection 500 est monté dans le logement 120 et dans l'équipement électrique 26, le positionnement du capteur de position 501 à cette première extrémité permet une détection de la position de la machine électrique 30 par le capteur de position 501. Une deuxième portion 502b du support 502 du dispositif de détection 500 s'étend depuis la première portion 502a vers une deuxième extrémité du support 502, formant en particulier une portion intermédiaire du dispositif de détection 500. En étant reçues contre les parois du logement 120, ces première 502a et deuxième 502b portions permettent de maintenir en place, au moins en partie, le dispositif de détection 500, en particulier le capteur de position 501.

Notamment, au moins un élément de connexion électrique 503 permet de connecter électriquement le capteur de position 501 avec le dispositif électronique de commande 40. Dans l'exemple illustré sur les figures, le dispositif de détection 500 comprend trois éléments de connexion électrique 503. Les éléments de connexion électrique 503 ont des premières extrémités 503a qui se connectent à des électrodes 501b respectives du capteur de position 501 ; et des deuxièmes extrémités 503b qui se connectent au dispositif électronique de commande 40. Le dispositif 500 pourrait comprendre plus ou moins d'éléments de connexion électrique 503 en fonction du nombre d'électrodes du capteur de position 501. Les connexions des éléments 503 se font par exemple par soudage.

En particulier, les éléments de connexion électrique 503 sont solidaires avec le support 502. Les éléments de connexion électrique 503 sont portés par le support 502 pour réaliser la connexion électrique du capteur de position 501. Ainsi, le support 502 permet à la fois le montage du capteur de position 501 dans le boîtier 20, notamment dans l'organe d'étanchéité 12, et le maintien des éléments de connexion électriques 503 entre le capteur de position 501 et le dispositif électronique de commande 40.

Notamment, les éléments de connexion électrique sont sous forme de languettes 503 qui s'étendent depuis la première portion 502a du support 502, le long de la deuxième portion 502b, jusqu'à la deuxième extrémité du support 502. Les deuxièmes extrémités 503b des éléments de connexion électrique 503 situées au niveau de la deuxième extrémité du support 502 peuvent être rapportées contre des bornes électriques respectives du dispositif électronique de commande 40, notamment pour alimenter le capteur de position 501 et/ou acheminer un signal de position de la machine électrique 30 depuis le capteur de position 501 vers le dispositif électronique de commande 40. Les éléments de connexion électrique 503 sont en particulier sensiblement rectilignes le long de la deuxième portion 502b du support 502 et présentent chacun un décrochement 503c au niveau de la deuxième extrémité du support 502. Ce décrochement 503c permet de se rapprocher des bornes électriques du dispositif électronique de commande 40 lorsque celles-ci ne sont pas dans le prolongement du dispositif de détection 500.

Notamment, la deuxième portion 502b du support 502 comprend deux tiges 504 qui s'étendent depuis la première portion 502a du support 502 jusqu'à la deuxième extrémité du support 502. Les deux tiges 504 peuvent s'étendre depuis les bords de la première portion 502a du support 502. En particulier, les éléments de connexion électrique 503 sont maintenus solidaires avec le support 502 grâce à des troisièmes portions 502c. Ces troisièmes portions 502c s'étendent transversalement depuis les tiges 504 et viennent en prise avec les éléments de connexion électrique 503. Les troisièmes portions 503c peuvent donc relier les deux tiges 504 entre elles. Des zones libres de matière peuvent séparer les troisièmes portions 502c entre elles. Le dispositif de détection 500 peut comprendre deux troisièmes portions 502 c comme illustré sur les figures, ou une, ou plus de deux. Cependant, le support 502 pourrait comprendre une seule tige 504, par exemple s'étendant depuis une zone centrale de la première portion 502a du support 502 ; avec une ou plusieurs troisièmes portions 502c qui maintiennent les éléments de connexion électrique 503. Notamment, les éléments de connexion électrique 503 sont en outre en prise avec la première portion 502a du support 502.

Notamment, le support 502 comprend deux excroissances 502d qui s'étendent chacune depuis la deuxième portion 502b. En particulier, chaque excroissance 502d s'étend depuis une tige 504. Les excroissances 502d viennent en appui sur un palier 120a, visible en figure 4, formé par une paroi latérale du logement 120. Ces excroissances 502d en venant en appui contre les paliers 120a contribuent à un maintien efficace du dispositif de détection 500 dans le logement 120.

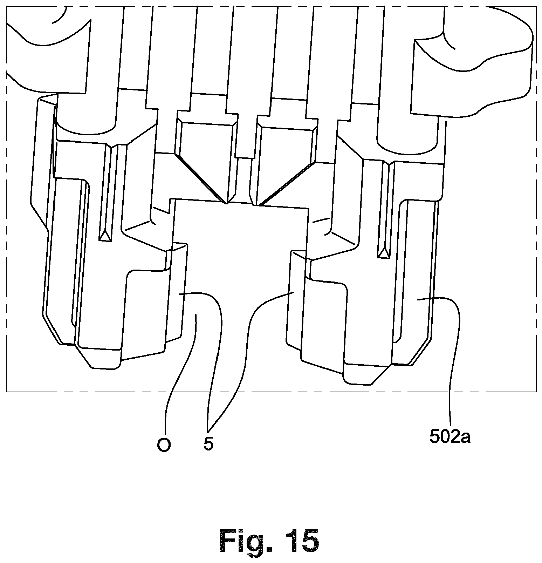

En particulier, le capteur de position 501 comprend un corps 501a et des électrodes 501b qui s'étendent depuis un côté du corps 501a. Par exemple, le corps 501a est sensiblement parallélépipédique. Notamment, comme illustré en figure 15, la première portion 502a du support 502 comporte une surface S sur laquelle un bord du corps 501a du capteur 501 vient en appui. La première portion 502a comprend en outre une ouverture O qui laisse découverte une partie centrale du corps 501a du capteur 501 lorsque le capteur 501 est monté sur la première portion 502a du support 502. Ainsi, on limite les épaisseurs de paroi entre l'arbre de rotation 303 et le capteur de position 501, lorsque le dispositif de détection 500 est monté dans l'équipement électrique 26, ce qui améliore la qualité de la détection réalisée par le capteur de position 501.

Notamment, lorsque le dispositif de détection 500 est monté dans l'organe d'étanchéité 12, puis dans le boîtier 20, le dispositif électronique de commande 40 vient en appui contre le support 502. Ainsi, le dispositif de détection 500 est maintenu d'une part du fait que le support 502 vient contre les parois du logement 120 et d'autre part du fait que le dispositif électronique de commande 40 bloque le dispositif de détection 500 dans le logement 120 en venant en appui sur le support 502 du dispositif de détection 500. La mise en appui du dispositif électronique de commande 40 contre le support 502 du dispositif de détection 500 peut être assurée par des excroissances 124 (visibles en figures 2 et 4) issues de l'organe d'étanchéité 12 qui passent dans des ouvertures correspondantes du dispositif électronique de commande 40 pour y être bouterollées. Les extrémités des tiges 504 situées au niveau de la deuxième extrémité du support 502 peuvent servir à localiser le dispositif électronique de commande 40 par rapport au dispositif de détection 500 lors de son montage, en venant dans des ouvertures correspondantes du dispositif électronique de commande 40. En particulier, le dispositif électronique de commande 40 peut comprendre une partie de puissance par laquelle circule un courant alimentant la machine électrique 30, et une partie de contrôle destinée à alimenter les composants de la partie de puissance ; les parties de puissance et de contrôle étant superposées l'une en vis-à-vis de l'autre. Dans ce cas, les extrémités des tiges 504 situées au niveau de la deuxième extrémité du support 502 peuvent traverser la partie de puissance pour se loger dans des ouvertures correspondantes de la partie de contrôle. Les éléments de connexion électrique 503 viennent alors se connecter à la partie de contrôle.

L'invention ne se limite pas au seul exemple décrit ci-dessus. Les figures représentent un exemple particulier de réalisation qui combine plusieurs modes de réalisation. Cependant, les caractéristiques liées aux modes de réalisation peuvent-être indépendantes entre elles d'un mode à l'autre, ou combinées entre elles, comme cela ressort des revendications.

L'invention a été décrite avec une pluralité de premières bornes 8 et une pluralité de secondes bornes 10 cependant, le dispositif de connexion 7 peut comprendre une seule borne 8 et une seule borne 10, notamment lorsque la machine 30 comporte une seule phase.

Dans l'exemple illustré sur les figures, le cylindre 18 du dispositif de connexion 7 a une section sensiblement en forme d'un hexagone, Cependant, une forme circulaire, ou autre, peut également être choisie.

Dans les exemples illustrés, le capteur 50, 501 est par exemple un capteur à effet hall, un capteur à élément magnéto résistif, ou autre.

## Revendications

1. Ensemble (6) comprenant :
- un dispositif de connexion (7) destiné à connecter électriquement une machine électrique (30) et un dispositif électronique de commande (40) de la machine,
- un organe d'étanchéité (12) destiné à être rapporté de manière étanche sur le dispositif de connexion (7),
ledit organe d'étanchéité (12) comprenant un logement (120) comportant un capteur de position destiné à mesurer une position de la machine électrique (30), ledit logement (120) étant configuré de façon à s'étendre principalement suivant une direction longitudinale (XX') du dispositif de connexion (7) lorsque ledit organe d'étanchéité (12) est rapporté sur le dispositif de connexion (7), ensemble **caractérise en ce que** le dispositif de connexion (7) comprend au moins une barre conductrice électriquement (8) reliant une première borne électrique (9) destinée à être rapportée sur une borne (301) de la machine électrique (30) et une seconde borne électrique (10) destinée à être rapportée sur une borne (22) du dispositif électronique de commande (40), la dite barre (8) étant revêtue de matière électriquement isolante.

2. Ensemble (6) selon la revendication 1, dans lequel ledit organe d'étanchéité (12) comprend une zone libre de matière (122) destinée à recevoir un arbre de rotation (303) de la machine électrique (30), notamment une extrémité de l'arbre de rotation (303) de la machine électrique (30), ledit capteur étant positionné en périphérie de la dite zone libre de matière (122).

3. Ensemble (6) selon la revendication 1 ou 2, dans lequel l'organe d'étanchéité (12) comprend une face (123) ayant :
- une partie sensiblement plane (123a), et
- une excroissance (123b) s'étendant depuis ladite face (123) et comportant ledit capteur de position.

4. Ensemble (6) selon les revendications 2 et 3, dans lequel ladite excroissance (123b) délimite la dite zone libre de matière (122).

5. Ensemble (6) selon l'une des revendications précédentes, dans lequel le dispositif de connexion (7) comprend une partie (9) qui est destinée à être connectée électriquement avec la machine électrique (30), et une partie (10) qui est destinée à être connectée électriquement avec le dispositif électronique de commande (40) de la machine.

6. Ensemble (6) selon la revendication précédente, dans lequel l'organe d'étanchéité (12) est destiné à venir de manière étanche entre la partie (9) du dispositif de connexion (7) qui est destinée à être connectée électriquement avec la machine électrique (30), et la partie (10) du dispositif de connexion (7) qui est destinée à être connectée électriquement avec le dispositif électronique de commande (40) de la machine.

7. Ensemble (6) selon la revendication 5 ou 6, dans lequel le logement (120) du capteur est configuré de sorte à s'étendre du côté de la partie (9) du dispositif qui est destinée à être connectée électriquement avec la machine électrique (30).

8. Ensemble (6) selon l'une des revendications 5 à 7, dans lequel l'organe d'étanchéité (12) est constitué d'un capot configuré pour recouvrir de manière étanche la partie (9) qui est destinée à être connectée électriquement avec la machine électrique (30).

9. Ensemble (6) selon l'une des revendications précédentes, dans lequel un côté du dispositif de connexion (7) comprend une portion (181) destinée à être rapportée de manière étanche sur un logement (202) de la machine électrique (30).

10. Ensemble (6) selon la revendication 9, dans lequel l'organe d'étanchéité (12) est destiné à être rapporté sur un côté (182) opposé au côté du dispositif qui comprend ladite portion (181).

11. Ensemble (6) selon la revendication 9 ou 10 en combinaison avec la revendication 5, dans lequel ladite portion (181) est configurée de sorte que, lorsque le dispositif de connexion (7) est vu suivant sa direction longitudinale (XX'), la portion (181) est entre la partie (9) du dispositif de connexion (7) qui est destinée à être connectée électriquement avec la machine électrique (30), et la partie (10) du dispositif de connexion (7) qui est destinée à être connectée électriquement avec le dispositif électronique de commande (40) de la machine.

12. Ensemble (6) selon l'une des revendications précédentes, dans lequel l'organe d'étanchéité (12) comprend un élément de positionnement (123b) destiné à assurer un positionnement de l'ensemble (6) par rapport à un logement (201) de la machine électrique (30) lors du montage de l'ensemble (6) sur le logement de la machine.

13. Ensemble (6) selon la revendication 12, dans lequel le logement (120) du capteur de position est compris dans l'élément de positionnement (123b).

14. Ensemble (6) selon l'une des revendications précédentes, dans lequel la matière électriquement isolante forme un cylindre creux (18) s'étendant suivant la direction longitudinale (XX') du dispositif de connexion (7), la première borne électrique (9) s'étendant dans le logement interne (180) du cylindre creux (18) depuis la paroi interne latérale du cylindre creux (18), la seconde borne électrique s'étendant depuis la paroi externe latérale du cylindre creux (18).

15. Ensemble (6) selon la revendication précédente, dans lequel le logement interne (180) du cylindre creux (18) est destiné à recevoir la borne (301) de la machine électrique (30), une première extrémité (181) du cylindre creux (18) étant destinée à venir en contact étanche avec une paroi (203) d'un logement (201) de la machine électrique (30) depuis laquelle s'étend la borne (301) de la machine.

16. Ensemble (6) selon la revendication précédente, dans lequel l'organe d'étanchéité (12) est configuré de manière à fermer une seconde extrémité (182) du cylindre creux (18) opposée à la première extrémité (181) en venant en contact étanche sur le cylindre (18).

17. Ensemble (6) selon l'une des revendications précédentes destiné à réaliser une connexion électrique interne à un boitier (20) recevant une machine électrique (30) et son dispositif électronique de commande (40).

18. Équipement électrique (26) comprenant :
- une machine électrique (30),
- un dispositif électronique de commande (40) destiné à commander la machine électrique,
- un boitier (20) logeant la machine électrique (30) dans un premier logement (201), et le dispositif électronique de commande (40) dans un deuxième logement (202), les deux logements (201, 202) étant étanches l'un par rapport à l'autre,
- un ensemble (6) selon l'une quelconque des revendications précédentes destiné à faire une connexion électrique étanche entre la machine électrique (30) et le dispositif électronique de commande (40).

19. Équipement électrique (26) selon la revendication précédente, dans lequel le capteur de position est positionné radialement par rapport à l'arbre de rotation (303) de la machine électrique (30), de manière à détecter un signal émis par un élément correspondant porté par l'arbre de rotation (303).

## Patentansprüche

1. Anordnung (6), umfassend:
- eine Verbindungsvorrichtung (7), die dazu bestimmt ist, eine elektrische Maschine (30) und eine elektronische Steuervorrichtung (40) der Maschine elektrisch zu verbinden,
- eine Abdichtvorrichtung (12), die dazu bestimmt ist, abdichtend auf der Verbindungsvorrichtung (7) angebracht zu sein,
wobei die Abdichtvorrichtung (12) eine Aufnahme (120) umfasst, die einen Positionssensor aufweist, der dazu bestimmt ist, eine Position der elektrischen Maschine (30) zu messen, wobei die Aufnahme (120) derart ausgelegt ist, dass sie sich hauptsächlich entlang einer Längsrichtung (XX') der Verbindungsvorrichtung (7) erstreckt, wenn die Abdichtvorrichtung (12) auf der Verbindungsvorrichtung (7) angebracht ist,
wobei die Anordnung **dadurch gekennzeichnet ist, dass** die Verbindungsvorrichtung (7) mindestens eine Stromschiene umfasst, die einen ersten elektrischen Anschluss (9), der dazu bestimmt ist, an einem Anschluss (301) der elektrischen Maschine (30) angebracht zu sein, und einen zweiten elektrischen Anschluss (10), der dazu bestimmt ist, an einem Anschluss (22) der elektronischen Steuervorrichtung (40) angebracht zu sein, elektrisch (8) verbindet, wobei die Schiene (8) mit einem elektrisch isolierenden Material überzogen ist.

2. Anordnung (6) nach Anspruch 1, wobei die Abdichtvorrichtung (12) einen von Material freien Bereich (122) umfasst, der dazu bestimmt ist, eine Drehwelle (303) der elektrischen Maschine (30) aufzunehmen, insbesondere ein Ende der Drehwelle (303) der elektrischen Maschine (30), wobei der Sensor am Rand des von Material freien Bereichs (122) positioniert ist.

3. Anordnung (6) nach Anspruch 1 oder 2, wobei die Abdichtvorrichtung (12) eine Seite (123) umfasst, die Folgendes aufweist:
- einen im Wesentlichen ebenen Bereich (123a), und
- einen Vorsprung (123b), der sich von der Seite (123) erstreckt und den Positionssensor aufweist.

4. Anordnung (6) nach Anspruch 2 und 3, wobei der Vorsprung (123b) den von Material freien Bereich (122) begrenzt.

5. Anordnung (6) nach einem der vorhergehenden Ansprüche, wobei die Verbindungsvorrichtung (7) einen Abschnitt (9), der dazu bestimmt ist, mit der elektrischen Maschine (30) elektrisch verbunden zu sein, und einen Abschnitt (10), der dazu bestimmt ist, mit der elektronischen Steuervorrichtung (40) der Maschine verbunden zu sein, umfasst.

6. Anordnung (6) nach dem vorhergehenden Anspruch, wobei die Abdichtvorrichtung (12) dazu bestimmt ist, abdichtend zwischen den Abschnitt (9) der Verbindungsvorrichtung (7), der dazu bestimmt ist, mit der elektrischen Maschine (30) elektrisch verbunden zu sein, und den Abschnitt (10) der Verbindungsvorrichtung (7), der dazu bestimmt ist, mit der elektronischen Steuervorrichtung (40) der Maschine elektrisch verbunden zu sein, zu kommen.

7. Anordnung (6) nach Anspruch 5 oder 6, wobei die Aufnahme (120) des Sensors so ausgelegt ist, dass sie sich von der Seite des Abschnitts (9) der Vorrichtung erstreckt, der dazu bestimmt ist, mit der elektrischen Maschine (30) elektrisch verbunden zu sein.

8. Anordnung (6) nach einem der Ansprüche 5 bis 7, wobei die Abdichtvorrichtung (12) von einer Abdeckung gebildet ist, die ausgelegt ist, den Abschnitt (9) der Vorrichtung, der dazu bestimmt ist, mit der elektrischen Maschine (30) elektrisch verbunden zu sein, abdichtend abzudecken.

9. Anordnung (6) nach einem der vorhergehenden Ansprüche, wobei eine Seite der Verbindungsvorrichtung (7) einen Abschnitt (181) umfasst, der dazu bestimmt ist, an einer Aufnahme (202) der elektrischen Maschine (30) abdichtend angebracht zu sein.

10. Anordnung (6) nach Anspruch 9, wobei die Abdichtvorrichtung (12) dazu bestimmt ist, an einer Seite (182) angebracht zu sein, die der Seite der Vorrichtung, die den Abschnitt (181) umfasst, entgegengesetzt ist.

11. Anordnung (6) nach Anspruch 9 oder 10 in Kombination mit Anspruch 5, wobei der Abschnitt (181) so ausgelegt ist, dass, wenn die Abdichtvorrichtung (7) entlang ihrer Längsrichtung (XX') betrachtet wird, sich der Abschnitt (181) zwischen dem Abschnitt (9) der Abdichtvorrichtung (7), der dazu bestimmt ist, mit der elektrischen Maschine (30) elektrisch verbunden zu sein, und dem Abschnitt (10) der Verbindungsvorrichtung (7), der dazu bestimmt ist, mit der elektronischen Steuervorrichtung (40) der Maschine elektrisch verbunden zu sein, befindet.

12. Anordnung (6) nach einem der vorhergehenden Ansprüche, wobei die Abdichtungsvorrichtung (12) ein Positionierungselement (123b) umfasst, das dazu bestimmt ist, eine Positionierung der Anordnung (6) bezogen auf eine Aufnahme (201) der elektrischen Maschine (30) bei der Befestigung der Anordnung (6) auf der Aufnahme der Maschine zu gewährleisten.

13. Anordnung (6) nach Anspruch 12, wobei die Aufnahme (120) des Positionssensors in dem Positionierungselement (123b) enthalten ist.

14. Anordnung (6) nach einem der vorhergehenden Ansprüche, wobei das elektrisch isolierende Material einen Hohlzylinder (18) bildet, der sich entlang der Längsrichtung (XX') der Verbindungsvorrichtung (7) erstreckt, wobei sich der erste elektrische Anschluss (9) in der inneren Aufnahme (180) des Hohlzylinders (18) von der seitlichen Innenwand des Hohlzylinders (18) erstreckt, wobei sich der zweite elektrische Anschluss von der seitlichen Außenwand des Hohlzylinders (18) erstreckt.

15. Anordnung (6) nach dem vorhergehenden Anspruch, wobei die innere Aufnahme (180) des Hohlzylinders (18) dazu bestimmt ist, den Anschluss (301) der elektrischen Maschine (30) aufzunehmen, wobei ein erstes Ende (181) des Hohlzylinders (18) dazu bestimmt ist, mit einer Wand (203) einer Aufnahme (201) der elektrischen Maschine (30), von der sich der Anschluss (301) der Maschine erstreckt, abdichtend in Kontakt zu kommen.

16. Anordnung (6) nach dem vorhergehenden Anspruch, wobei die Abdichtungsvorrichtung (12) so ausgelegt ist, dass sie ein zweites Ende (182) des Hohlzylinders (18) verschließt, das dem ersten Ende (181) gegenüberliegt, indem sie auf dem Zylinder (18) abdichtend in Kontakt kommt.

17. Anordnung (6) nach einem der vorhergehenden Ansprüche, die dazu bestimmt ist eine elektrische Verbindung in einem Gehäuse (20) zu schaffen, das eine elektrische Maschine (30) und ihre elektronische Steuervorrichtung (40) aufnimmt.

18. Elektrische Einrichtung (26), umfassend:
- eine elektrische Maschine (30),
- eine elektronische Steuervorrichtung (40) zur Steuerung der elektrischen Maschine,
- ein Gehäuse (20), das die elektrische Maschine (30) in einer ersten Aufnahme (201) und die elektronische Steuervorrichtung (40) in einer zweiten Aufnahme (202) aufnimmt, wobei die zwei Aufnahmen (201, 202) bezogen aufeinander dicht sind,
- eine Anordnung (6) nach einem der vorhergehenden Ansprüche zur Herstellung einer dichten elektrischen Verbindung zwischen der elektrischen Maschine (30) und der elektronischen Steuervorrichtung (40).

19. Elektrische Einrichtung (26) nach dem vorhergehenden Anspruch, wobei der Positionssensor bezogen auf die Drehwelle (303) der elektrischen Maschine (30) radial positioniert ist, um ein Signal zu erkennen, das von einem entsprechenden Element abgegeben wird, das von der Drehwelle (303) getragen wird.

## Claims

1. Assembly (6) comprising:
- a connecting device (7) intended to electrically connect an electric machine (30) and an electronic control device (40) of the machine,
- a sealing member (12) intended to be added in a seal-tight manner to the connecting device (7),
said sealing member (12) comprising a housing (120) including a position sensor intended to measure a position of the electric machine (30), said housing (120) being configured so as to extend mainly along a longitudinal direction (XX') of the connecting device (7) when said sealing member (12) is added to the connecting device (7),
the assembly being **characterized in that** the connecting device (7) comprises at least one electrically conducting bar (8) linking a first electrical terminal (9) intended to be added to a terminal (301) of the electric machine (30) and a second electrical terminal (10) intended to be added to a terminal (22) of the electronic control device (40), said bar (8) being coated with electrically insulating material.

2. Assembly (6) according to Claim 1, in which said sealing member (12) comprises a zone free of material (122) intended to receive a rotation shaft (303) of the electric machine (30), in particular one end of the rotation shaft (303) of the electric machine (30), said sensor being positioned at the periphery of said zone free of material (122).

3. Assembly (6) according to Claim 1 or 2, in which the sealing member (12) comprises a face (123) having:
- a substantially flat part (123a), and
- a protuberance (123b) extending from said face (123) and including said position sensor.

4. Assembly (6) according to Claims 2 and 3, in which said protuberance (123b) delimits said zone free of material (122).

5. Assembly (6) according to one of the preceding claims, in which the connecting device (7) comprises a part (9) which is intended to be electrically connected with the electric machine (30), and a part (10) which is intended to be electrically connected with the electronic control device (40) of the machine.

6. Assembly (6) according to the preceding claim, in which the sealing member (12) is intended to come in a seal-tight manner between the part (9) of the connecting device (7) which is intended to be electrically connected with the electric machine (30), and the part (10) of the connecting device (7) which is intended to be electrically connected with the electronic control device (40) of the machine.

7. Assembly (6) according to Claim 5 or 6, in which the housing (120) of the sensor is configured so as to extend on the side of the part (9) of the device which is intended to be electrically connected with the electric machine (30).

8. Assembly (6) according to one of Claims 5 to 7, in which the sealing member (12) is composed of a cap configured to cover in a seal-tight manner the part (9) which is intended to be electrically connected with the electric machine (30).

9. Assembly (6) according to one of the preceding claims, in which one side of the connecting device (7) comprises a portion (181) intended to be added in a seal-tight manner to a housing (202) of the electric machine (30).

10. Assembly (6) according to Claim 9, in which the sealing member (12) is intended to be added to a side (182) opposite the side of the device which comprises said portion (181).

11. Assembly (6) according to Claim 9 or 10 in combination with Claim 5, in which said portion (181) is configured such that, when the connecting device (7) is seen along its longitudinal direction (XX'), the portion (181) is between the part (9) of the connecting device (7) which is intended to be electrically connected with the electric machine (30), and the part (10) of the connecting device (7) which is intended to be electrically connected with the electronic control device (40) of the machine.

12. Assembly (6) according to one of the preceding claims, in which the sealing member (12) comprises a positioning element (123b) intended to ensure a positioning of the assembly (6) relative to a housing (201) of the electric machine (30) when the assembly (6) is mounted on the housing of the machine.

13. Assembly (6) according to Claim 12, in which the housing (120) of the position sensor is included in the positioning element (123b).

14. Assembly (6) according to one of the preceding claims, in which the electrically insulating material forms a hollow cylinder (18) extending along the longitudinal direction (XX') of the connecting device (7), the first electrical terminal (9) extending in the internal housing (180) of the hollow cylinder (18) from the inner lateral wall of the hollow cylinder (18), the second electrical terminal extending from the outer lateral wall of the hollow cylinder (18).

15. Assembly (6) according to the preceding claim, in which the internal housing (180) of the hollow cylinder (18) is intended to receive the terminal (301) of the electric machine (30), a first end (181) of the hollow cylinder (18) being intended to come into seal-tight contact with a wall (203) of a housing (201) of the electric machine (30) from which the terminal (301) of the machine extends.

16. Assembly (6) according to the preceding claim, in which the sealing member (12) is configured so as to close a second end (182) of the hollow cylinder (18) opposite the first end (181) by coming into seal-tight contact on the cylinder (18).

17. Assembly (6) according to one of the preceding claims intended to produce an electrical connection internal to a casing (20) receiving an electric machine (30) and its electronic control device (40).

18. Electrical equipment item (26) comprising:
- an electric machine (30),
- an electronic control device (40) intended to control the electric machine,
- a casing (20) housing the electric machine (30) in a first housing (201), and the electronic control device (40) in a second housing (202), the two housings (201, 202) being seal-tight with respect to one another,
- an assembly (6) according to any one of the preceding claims intended to make a seal-tight electrical connection between the electric machine (30) and the electronic control device (40).

19. Electrical equipment item (26) according to the preceding claim, in which the position sensor is positioned radially relative to the rotation shaft (303) of the electric machine (30), so as to detect a signal emitted by a corresponding element borne by the rotation shaft (303).
